# EUROPEAN PATENT APPLICATION

(11) **EP 3 177 078 A1**
(43) Date of publication of application: **07.06.2017**
(21) Application number: 15306910.9
(22) Date of filing: 02.12.2015
(51) Int. Cl.: H04W 48/16, H04W 84/12, H04L 12/28

(54) **A METHOD, A WIRELESS ACCESS POINT, AND A CLIENT FOR LOCAL ADVERTISEMENT OF THE IDENTIFIER OF AN OPERATOR CONTROLLING AND MANAGING THE SMART ENVIRONMENT OF CONNECTED OBJECTS**

(71) Applicant: ALCATEL LUCENT, 92100 Boulogne-Billancourt (FR)
(72) Inventor: LE PALLEC, Michel, 91620 Nozay (FR); BOUSSARD, Mathieu, Nozay 91620 (FR)
(74) Representative: Berthier, Karine

(57) **Abstract**

A method for local advertisement of the identifier of an operator (MAO, ..., MA3) controlling and managing a smart environment (LAN0, ..., LAN3) comprising connected objects (D01, D02, D1, D2, D3) and a wireless access point (AP0, AP1, AP2, AP3), comprises the step of broadcasting an information field (F) as part of the beacon frame of said wireless access point (AP0, AP1, AP2, AP3).

This information field (F) comprises:
- a field identifier (FID) having a specific value indicating that this field is dedicated to the advertisement of the network identifier of an operator (MAO, ..., MA3) controlling and managing a smart environment (LAN0, ..., LAN3),
- data (DAT) comprising the network identifier of an operator (MAO, ..., MA3) controlling and managing a smart environment (LAN0, ..., LAN3) comprising the wireless access point (AP0, AP1, AP2, AP3) broadcasting the beacon frame comprising said information field,
- and a value (L) of the length of said information field (F).

## Description

### BACKGROUND OF THE INVENTION

### Field of the invention

The present invention generally relates to the communities of so called connected devices, i. e. devices that are connected to a data transmission network. Connected devices can be found in various networks implemented in different smart environments such as homes, buildings, cities, and more generally all static and mobile real world environments populated by connected devices.

Now the number of connected devices increases as well as their variety. As a consequence, the management of a network connecting a plurality of devices becomes a burden for the people in charge of this task, especially for home networks that are managed by their end-users themselves, most of them not having the required skills.

A known solution consists in delegating the control and management of a network, connecting a plurality of connected devices, to an external entity-an environment operator that we will call "majordomo" in what follows. The end-users of each network remain in control of what is happening in this network through a simplified interface of this majordomo.

The Software Defined Network (SDN) paradigm is helpful as it separates the control and the data planes that can belong to different administrative domains. Applying the SDN principles, a majordomo architecture has been designed and a software-based solution called Software-Defined Local Area Network (SD-LAN) has been proposed in order to interconnect the devices of different respective smart environments, according to the services the users are requesting or expecting.

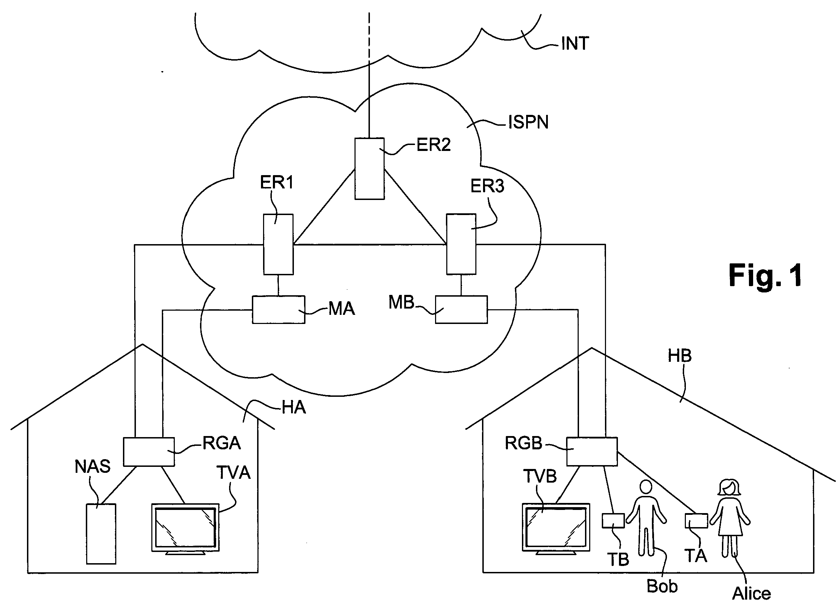

**Figure 1** illustrates the case where two exemplary networks are involved in providing a service to connected devices. Alice is the nominal user of a home local area network (LAN) in a house HA. This home LAN comprises a residential gateway RGA, a network area storage NAS, and a television set TVA.

Bob is the nominal user of a home LAN in a house HB. This home LAN comprises a residential gateway RGB and a television set TVB. Both residential gateways RGA and RGB are linked to the network ISPN of an Internet Service Provider, this network ISPN being linked to the public internet INT.

The network ISPN comprises edge routers ER1, ER2, ER3 that are interconnected, the edge router ER2 being further connected to the public internet INT. The residential gateway RGA is connected to the edge router ER1 and to a majordomo MA managing Alice's home LAN. The residential gateway RGB is connected to the edge router ER3 and to a majordomo MB managing Bob's home LAN.

At the considered time, Alice and Bob are in Bob's house, and Alice wants to display, on Bob's television set TVB, a video that is stored on her network area storage NAS. Bob uses a tablet TB and Alice uses a tablet TA. These tablets are presently connected to Bob's residential gateway RGB by Wi-Fi links.

Alice and Bob wish to use their tablets TA, TB to control the majordomos MA and MB in order to use the network area storage NAS and the television set TVB as if they were in a same LAN.

A known method to reach this aim consists in the cooperation between the two majordomos MA and MB to create a temporary SD-LAN between the network area storage NAS in the house HA and the connected television set TV in house HB, in response to a user request. The majordomo MA and the majordomo MB are run on two respective servers of the internet service supplier network ISPN. Bob knows the IP address and the credentials of his majordomo MB. Alice knows the IP address and the credentials of her majordomo MA.

Once the majordomos MA and MB have automatically and collaboratively set-up the SD-LAN, the television set TVB can access the content of the network area storage NAS as if both devices were in a same LAN, enabling a user to select and play movies with a native application on the television set TVB, this application complying with the Digital Living Network Alliance, (/Universal Plug and Play Protocol (UPnP)

In this example, each smart environment has its own majordomo. Alice, who is at Bob's Home, first needs to connect her majordomo MA to Bob's majordomo MB. So Alice - or/and her majordomo MA- first needs to know how to reach Bob's majordomo MB. In this example, only a Wi-Fi connectivity is available.

Alice connects her tablet TA to Bob's home LAN by using the Wi-Fi technology (by using related credentials). By doing so, Alice's tablet TA is a guest in Bob's home LAN and Alice can also access the whole internet. Alice's view on objects at Bob's home is much more limited compared to Bob's view, as access control rules are enforced by Bob's majordomo MB. Therefore, Alice's home LAN is in a 'guest' network presenting an 'interface' towards Bob's majordomo MB, through a network controller (not represented) of the internet service supplier network ISPN. Accordingly, Bob's majordomo MB is able to provide its network identifier to Alice's tablet. Then Alice forwards this information to her majordomo MA in order to trigger an inter-majordomo negotiation process.

In this example, Alice's majordomo MA and Bob's majordomo MB are respectively hosted by two servers of the internet service provider network ISPN, but nothing prevents them from being hosted by a cloud service provider.

In this example, Bob and Alice are in the environment of Bob's home. Both are respectively using tablets TA, TB connected to Bob's residential gateway by Wi-Fi technology, but other technologies and especially other wireless technologies could be used instead of Wi-Fi: Zigbee, Bluetooth, Zwave, etc. In other examples where connected devices are not Internet Protocol (IP) read, an IP agent, called "a proxy" is part of the home LAN, because it is usually necessary to guarantee IP interoperability. This agent represents the 'device' to be managed by the related majordomo.

A technical problem remaining to be solved is related to the knowledge of the internet identifier of Bob's majordomo interface, in order to set-up an inter-majordomo negotiation process. A known solution relies on an "itinerant mode" combined with a "Wi-Fi connected mode". In this solution, Alice's tablet is connected to Bob's home LAN and so the internet identifier of Bob's majordomo MB can easily be discovered by Alice's tablet through different protocols: Domain Name System Service Discovery, or Universal Plug and Play, etc. Alice's tablet is then able to forward this information to the majordomo MA of Alice's home network.

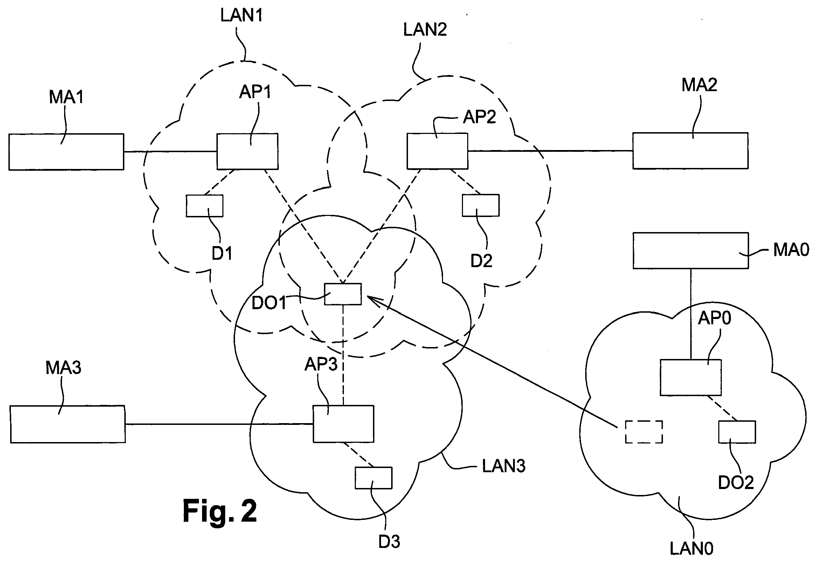

Although suitable, this solution appears suboptimal in two cases:
1) An itinerant or mobile end-user may find numerous smart environments in his/her area of Wi-Fi detection, when this end-user wants to setup a service implying his/her smart environment and at least one the numerous other detected smart environments. In such a case, the mobile or itinerant user should have to connect/join all the numerous available smart environments, through Wi-Fi, in order to capture the network identifiers of the related majordomos.
   For instance, **Figure 2** illustrates the case where five exemplary environments, constituted by five local area networks LAN0, LAN1, LAN2, LAN3, LAN4, can be involved in providing a service to an itinerant connected device D01. The local area network LAN0 comprises a Wi-Fi access point AP0 and two connected devices D01 and D02. At the considered time, the device D02 is connected to this Wi-Fi access point AP0 of the local area network LAN0, whereas the connected device D01 is itinerant outside the range of the access point AP0.
   The local area network LAN1 comprises a Wi-Fi access point AP1 and a connected device D1. The local area network LAN2 comprises a Wi-Fi access point AP2 and a connected device D2. The local area network LAN3 comprises a Wi-Fi access point AP3 and a connected device D3. All these Wi-Fi access point AP0, AP1, AP2, AP3 comply with the IEEE 802.11 standard.
   The Wi-Fi access point AP0 is connected to a majordomo MA0. The Wi-Fi access point AP1 is connected to a majordomo MA1. The Wi-Fi access point AP2 is connected to a majordomo MA2. The Wi-Fi access point AP3 is connected to a majordomo MA3.
   At the considered time, the itinerant connected device D01 can detect the beacon frames of the Wi-Fi access points AP1, AP2, AP3 only. The user of the connected device D01 wants to create a virtual local area (a SD-LAN) gathering all the connected objects D01, D02, D1, D2, D3 of the local area networks LAN0, LAN1, LAN2, LAN3. According to the prior art, in such a case the user of the device D01 would have to connect/join all the four available smart environments, through Wi-Fi, in order to capture the network identifiers of the related majordomos, MA0, MA1, MA2, MA3.
2) In mobile scenarios, wireless capabilities are not optimally used. If we would extend the known solution to a mobile scenario, a mobile terminal would need to be in Wi-Fi connected mode in order to capture the local majordomo identifiers, whatever the network services running on the mobile device. This represents an issue for available mobile devices: Indeed Wi-Fi and 4G clients should be available at the same time. Practically this is undesirable because of requirements related to network isolation. Having a smart device able to bridge two different networks is clearly not recommended (As a precaution, mobile devices have to be in a rooted mode to unlock this functionality). Accordingly, a mobile will give up its mobile connectivity (3G/4G/5G) for being Wi-Fi connected. Going further, for many scenarios, a LTE/4G mobile connection would be more adapted than a Wi-Fi one (associated to a wire line connection) in order to support all kinds of services and especially video-based services. LTE/4G deployments are going faster and faster, and it is a more and more a common situation to see a LTE/4G connectivity faster than a Wi-Fi hotspot associated with an asynchronous digital subscriber line (e.g. true 50 Mbits/s download and 20 Mbit/s upload in LTE, compared to a 20 Mbits/s download and 1 Mbit/s upload in Wi-Fi plus asynchronous digital subscriber line. This particularly means that a mobile device would switch back from a Wi-Fi connection to a LTE/4G connection as soon as possible. The whole process: Disconnect LTE, connect WIFI, disconnect WIFI, and finally connect LTE clearly appears suboptimal.

### Description of the prior art

A solution could be to provide a public repository/directory wherein the respective network/internet identifiers of all the majordomos (e.g. a Uniform Resource Identifier (URI) or an IP address per majordomo) would be stored in association with the identifiers of their managed connected devices. This public repository should take into account privacy and sharing rules of connected devices. The document US 859 5384 describes such a central directory server for automatic network information access.

Such a public repository/directory would have the following requirements: Basically, two extreme cases of database information could be considered according to the ability to view or use connected devices (that are the reason for contacting a majordomo)
1) If there is no view and no use of the connected devices (i. e. private connected devices): The connected devices composing a smart environment are not advertised. This may lead to a situation wherein the related majordomo is finally not registered in the repository (because of the absence of connected device). While considering the existence of shareable connected device, then the network identifier of the related majordomo should be registered. Accordingly an end-user from another smart environment would have to connect and send requests to the related majordomo in order to fully discover and use potentially shareable devices. In this case, the related majordomo/smart environment should be referenced with real world identifiers (e.g. a Global Positioning System (GPS) location, a user's name and mail address, etc) in order to unambiguously retrieve the majordomo identifier.
   Note: Users don't know how to configure their smart environment, and more generally this configuration is not an obvious task, even for the skilled I users of the smart environments, themselves. Accordingly connected devices could very often be in a private mode (no view and no use).
2) If there is full view/full use (i. e. public environements with a public view and access of connected devices): For such a case, a majordomo identifier should be referenced with a detailed list of the networked connected devices, with important details (capabilities, location, barcodes...). Thus, since a connection to the internet would be available, an end-user could retrieve, through this database, a majordomo identifier related to a networked device
   Nevertheless the solution of a public repository/directory presents the following issues, especially for connected devices belonging to private environments (restricted view and access)
   - This solution would involve a prior knowledge (or a prediction) of devices available in all the private smart environments in order to seamlessly setup a connected device-based service. This particularly prevents from having simple opportunistic behaviours. For instance, while physically discovering an interesting connected device in a private physical environment, getting the knowledge of the related majordomos would imply either:
      -- To be connected to each smart environment.
      -- Or to connect to a majordomo database (a server) in order to retrieve the related network identifiers by using a physical mean (e. g. a barcode).
   - This solution would need a connection to the internet. Accordingly, an itinerant user would need to firstly join a LAN in order to benefit from an internet connection, or to simply discover related LANs of private smart environments (authorized view only). Therefore, this situation would still present the first depicted issue (Wi-Fi disconnection/connection for each smart environment).
   - If the related database server or the internet connection related to the public repository/directory fails then the related based services would be impacted. Going further, as a remote server, user experience should be impacted by latency issues (network and server related).
   - The majordomo identifier repository would need to be regularly refreshed. It would require, as the Domain Name System solution, dedicated hardware and software resources. Regarding the number of connected devices and the number of related networks, this repository would represent a nightmare in terms of management.
   - Although efficient for all public connected devices, this solution comprising a repository would suffer from privacy issues. All the owners of private environments (Homes, Enterprise, etc) would be reluctant to fully expose and share the knowledge of the connected devices they own. This is particularly true for all private spaces, and especially for very sensitive networks such as mobile connected devices (e.g. all connected devices attached to our own body, e.g. a pacemaker that could be shared with a doctor).
   - Furthermore connected devices represent a clear vulnerability in terms of network security. There are lot of references on this topic, e. g. about the Universal Plug and Play vulnerability. Accordingly presenting connected devices with their related majordomos means presenting majordomos with their vulnerabilities. The situation is even worse when connected devices are referenced with a GPS location (The smart environment is therefore identified). This vulnerability may compromise: a smart environment, its majordomo, and the majordomo repository itself (Similarly to the Domain Name System, this repository would be a good target for all cyber attacks).

For all these reasons, the solution of a public centralized/cloudified repository/directory would not be fully satisfactory.

This can be solved by applying, the method according to the invention.

### SUMMARY OF THE INVENTION

A first object of the invention is a method for local advertisement of the identifier of an operator controlling and managing a smart environment comprising connected objects and a wireless access point,
characterized in that it comprises the step of broadcasting an information field as part of the beacon frame of said wireless access point;
and in that said information field comprises:
- a field identifier having a specific value indicating that this field is dedicated to the advertisement of the network identifier of an operator controlling and managing a smart environment,
- data comprising the network identifier of an operator controlling and managing a smart environment comprising the wireless access point broadcasting the beacon frame comprising said information field,
- and a value of the length of said information field.

Thanks to the field identifier contained in each information field broadcasted in beacon frames, it is easy to quickly capture all the identifiers of the operators (Majordomos) respectively associated to the local area networks that respectively comprise the wireless access points that can be detected. Another advantage is a better security provided by the physically constrained local advertisement of the operator identifiers.

According to a particular embodiment, said information field is a subelement of an information element comprising:
- at least this subelement,
- an element identifier having a specific value indicating that this field is dedicated to the advertisement of information related to an operator ( controlling and managing a smart environment,
- and a value of the length of said information element.

Optionaly said information element (En) further comprises at least a second information subelement comprising:
- a subelement identifier having a specific value indicating that this subelement is dedicated to the advertisement of a given piece of information related to smart environment,
- data containing a given piece of information related to smart environment,
- and a value of the length of said second information subelement.

This latter information element enables the simultaneous advertisements of several pieces of information related to the same smart environment data. For instance:
- Other data related to the operator associated with the wireless access point broadcasting this beacon frame.
- Other data related to a device connected to the smart environment associated to the operator.

A second object of the invention is a wireless access point comprising means for implementing the method according to one of the claims 1 to 5.

A third object of the invention is a software client comprising means for implementing the method according to one of the claims 1 to 5.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1, described above, illustrates the case where two exemplary networks can be involved in providing a service based on connected devices.
- Figure 2 described above, illustrates the case where four exemplary networks can be involved in providing a device -based service in an itinerant scenario.
- Figures 3A represents a first possible format used for applying the method according to the invention.
- Figures 3B represents a second possible format for applying the method according to the invention.
- Figures 3C represents a third possible format for applying the method according to the invention.
- Figures 3D represents a fourth possible format for applying the method according to the invention.

### DETAILED DESCRIPTION OF THE PREFERRED EMBODIMENTS

The technology called Wi-Fi is defined and specified by the IEEE 802.11 standard. An element of this standard is the beacon frame which is sent by the Wi-Fi access points to broadcast information relative to the Wi-Fi network. As part of the beacon frame, one or several Information Elements of variable length may be carried.

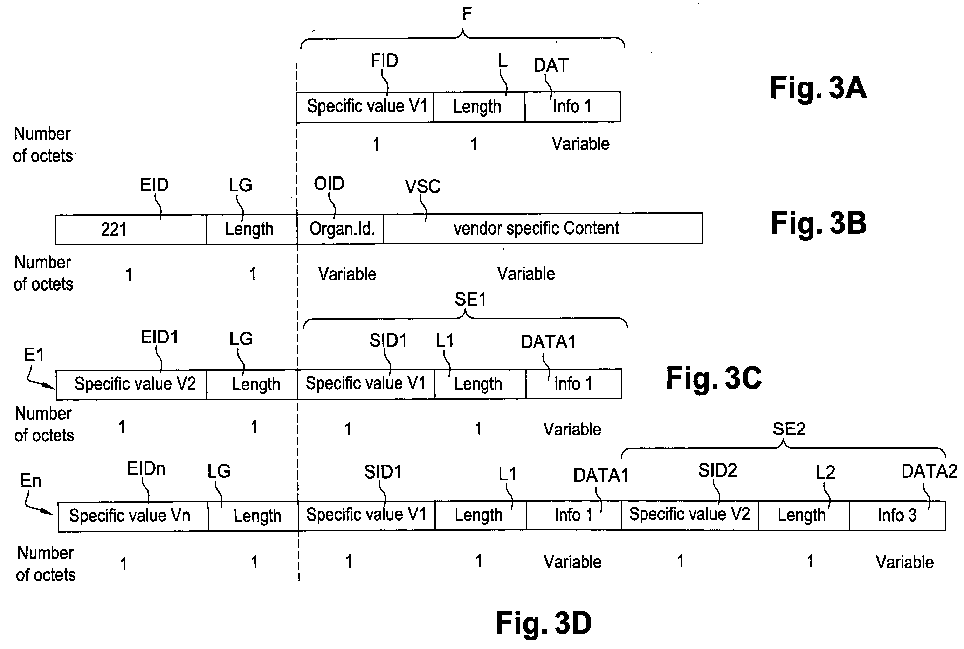

Figure 3A represents a first possible format for an information field F that will be a part of a beacon frame broadcasted by a Wi-Fi access point, for applying the method according to the invention. This first format is compatible with the standardized format for the information carried by a Wi-Fi beacon frame. It comprises:
- A field identifier FID of one octet, containing a specific value indicating that this information field F is dedicated to the advertisement of the identifier of an operator (Majordomo) controlling and managing a smart environment comprising the wireless access point broadcasting the beacon frame comprising said information element.
- A field L of one octet containing the length of the information field F.
- A data field DAT of a variable number of octets, containing the network identifier of an operator, to be broadcasted.

For instance, the data field DATA contains the network identifier of the majordomo MA1 controlling and managing the smart environment LAN1, if the information field F is part of the beacon frame broadcasted by the wireless access point AP1 belonging to the smart environment LAN1.

The field identifier FID shall carry a value exclusively dedicated to one type of information: the network identifier of an operator (Majordomo). The assignment of this value is not important as part of the invention, however in the context of an implementation or even of a standardization of this invention, a value must be selected. The IEEE 802.11 standard defines several types of information elements and thus has already assigned values to the respective identifier fields of these information elements, these values being selected from the pool of possible values [0, 255]. It has also defined reserved ranges (for future assignment).
The network identifier of a majordomo may be a uniform resource identifier (mapped to an IP address), or a domain name, or an IP address (version 4 or version 6), or any other network identifier.

The IEEE 802.11 standard has defined a vendor specific information element. It respects the basic standard format: Element identifier, Length, information field. For this type of information element, the standard value of the element identifier is 221.
**Figure 3B** represents a second possible format for an information element used for applying the method according to the invention. It is compatible with the generic format for vendor specific information, according to IEEE 802.11 standard. It comprises:
- A field EID of one octet containing the value 221 identifying the type of information element as being specific to a vendor.
- A field LG of one octet containing the length of the information element.
- A field OID comprising a variable number of octets containing the identifier of a vendor.
- A field VSC comprising a variable number of octets containing a vendor specific content to be broadcasted. According to the invention, this field VSC comprises the network identifier of an operator, to be broadcasted.

For instance, the field VSC contains the network identifier of the majordomo MA1 controlling and managing the smart environment LAN1 comprising the wireless access point AP1 broadcasting the beacon frame comprising said information element.

So the method according to the invention could also use the standard format dedicated to the vendor specific contents, as represented on Figure 3B, if proprietary implementation would be contemplated. The use of the standard vendor specific information element would be sufficient. However proprietary implementation makes very little sense as the mechanism requires: a Wi-Fi access point to send specific information, under a given format, and a Wi-Fi client to be able to process that information. Interoperability is thus required. The situation where the Wi-Fi access point and the Wi-Fi client are from the same vendor is far too restrictive.

**Figures 3C** represents a third possible format E1 for an information element used for applying the method according to the invention. It is also compatible with the standardized format for the information carried by a Wi-Fi beacon frame: Element identifier, Length, information. It comprises:
- A field EID1 of one octet containing an identifier of the information element. According to the invention this identifier has a specific value V2 indicating that this information element is dedicated to the advertisement of any type of information related to a smart environment, whatever the type of information.
- A field LG of one octet containing the length of the whole information element.
- A single subelement SE1 comprising:
   -- A field SID1 of one octet containing a specific value V1 indicating that this subelement SE1 is dedicated to the advertisement of the identifier of an operator (Majordomo) controlling and managing a smart environment comprising the wireless access point broadcasting the beacon frame comprising said information element.
   -- A field L1 of one octet containing the length of the information subelement SE1.
   -- A field DATA1 comprising a variable number of octets containing the network identifier of an operator (Majordomo) controlling and managing a smart environment comprising the wireless access point broadcasting the beacon frame comprising said information element.

For instance, the field DATA1 contains the network identifier of the majordomo MA1 controling and managing the smart environment LAN1 comprising the wireless access point AP1 broadcasting the beacon frame comprising said information element.
This network idenntifier could be either a uniform resource identifier (mapped to an IP address), or a domain name, or an IP address (version 4 or version 6), or any other network identifier.

**Figure 3D** represents a third possible format En for an information element used for applying the method according to the invention. It will be used for the local advertisement of the network identifier of an operator (A majordomo) and more information related to security, or 'trustability' /confidence, or the devices connected in the smart environment controlled and managed by this operator.
It is also compatible with the standardized format for the information carried by a Wi-Fi beacon frame: Element identifier, Length, information. It comprises:
- A field EIDn of one octet containing an information element identifier.
- A field LG of one octet containing the length of the whole information element.
- A first subelement similar to the above described subelement SE1 for advertisement of the identifier of an operator (Majordomo) controlling and managing a smart environment comprising the wireless access point broadcasting the beacon frame comprising said information element.
- A second subelement SE2 for carrying another piece of information related to the same given environment.

This second subelement SE2 comprises:
- A field SID2 of one octet carrying a subelement identifier indicating that this subelement is carrying a given type of additional information related to an operator (Majordomo) or environment.
- A field L2 of one octet containing the length of the whole information subelement SE2.
- A field DATA2 of variable length that carries additional information related to an operator (Majordomo) or environment associated with the Wi-Fi access point broadcasting this beacon frame.

For instance, the data field DATA2 of the second subelement SE2 may carry the following additional information related to a majordomo:
- A host name defining the entity hosting the majordomo, e. g. Orange , ATT, Amazon Google, etc.
- A host location: e. g. France, Helsinki, etc.
- The commercial name of the network controller: e.g. Homemade, Opendaylight, etc

More many subelements can be added into this fourth format. So it can advertises the existence and the network identifier of a smart environment operator (A majordomo) and simultaneously advertise several other information pieces that may be related to security, to trust, or to the devices connected in the smart environment controlled and managed by the majordomo identified by means of the first subelement.

The method according to the invention may further comprise the step of filtering the information to be broadcasted, by the Wi-Fi access point, in order to prevent a scalability issue. This filtering would select only sharable connected devices, for limiting the number of advertised subelements.

An administrator of a Wi-Fi access point can configure, in this Wi-Fi access point, the identifier of the environment operator (A majordomo) associated with the Wi-Fi access point broadcasting this beacon frame, in the same way as the administrator usually configures the currently defined Wi-Fi parameters.
The method according to the invention enables receiving majordomo identifiers by only "listening" to the access point, i. e. without any connection process. Nevertheless, while connected to the relevant access point, an authorization step could be added for authorizing access and use the connected devices composing a smart environment.

The development of a Wi-Fi access point comprising means for generating such Information elements and subelements, and sending it/them as part of a beacon frame, is within the scope of a man skilled in the art.
The development of a Wi-Fi client comprising means for receiving and processing such Information elements and subelements is within the scope of a man skilled in the art. These means may be Wi-Fi network management software running on the Wi-Fi client in order to make available, to the Wi-Fi client user, the majordomo identifier contained in the Information element, similarly to the way it does for the currently defined Wi-Fi network information (e.g. the Wi-Fi network identifier).
This Wi-Fi network management software could also comprise means for filtering the advertised information for a seamless (and automated) selection of a relevant access point.

The scope of the invention is not restricted to the Wi-Fi technology. Other wireless technologies, such as Bluetooth, are also relevant in the depicted context.

## Claims

1. A method for local advertisement of the identifier of an operator (MA0, ..., MA3) controlling and managing a smart environment (LAN0, ..., LAN3) comprising connected objects (D01, D02, D1, D2, D3) and a wireless access point (AP0, AP1, AP2, AP3),
**characterized in that** it comprises the step of broadcasting an information field (F) as part of the beacon frame of said wireless access point (AP0, AP1, AP2, AP3);
and **in that** said information field (F) comprises:
- a field identifier (FID) having a specific value indicating that this field is dedicated to the advertisement of the network identifier of an operator (MA0, ..., MA3) controlling and managing a smart environment (LAN0, ..., LAN3),
- data (DAT) comprising the network identifier of an operator (MA0, ..., MA3) controlling and managing a smart environment (LAN0, ..., LAN3) comprising the wireless access point (AP0, AP1, AP2, AP3) broadcasting the beacon frame comprising said information field,
- and a value (L) of the length of said information field (F).

2. A method according to claim 1, wherein said information field (F) is a subelement (SID1-L1-DATA1) of an information element (E1) comprising:
- at least this subelement (SID1-L1-DATA1),
- an element identifier (EID1) having a specific value indicating that this field is dedicated to the advertisement of information related to an operator (MA0, ..., MA3) controlling and managing a smart environment (LAN0, ..., LAN3),
- and a value (LG) of the length of said information element.

3. A method according to claim 2, wherein said information element (En) further comprises at least a second subelement (SE2) comprising:
- a subelement identifier (SID2) having a specific value indicating that this subelement is dedicated to the advertisement of a given piece of information related to smart environment (LAN0, ..., LAN3),
- data (DATA2) containing a given piece of information related to smart environment (LAN0, ..., LAN3),
- and a value (L2) of the length of said second information subelement (SE2).

4. Method according to claim 1 further comprising the step of filtering the information to be broadcasted by a wireless access point, by selecting only the pieces of information related to sharable connected devices.

5. A method according to claim 1, **characterized in that** said access point (AP0, AP1, AP2, AP3) complies with the IEEE 802.11 standard.

6. A wireless access point comprising means for implementing the method according to one of the claims 1 to 5.

7. A software client comprising means for implementing the method according to one of the claims 1 to 5.
